# EUROPÄISCHE PATENTANMELDUNG

(11) **EP 2 058 041 A1**
(43) Veröffentlichungstag der Anmeldung: **13.05.2009**
(21) Anmeldenummer: 08105744.0
(22) Anmeldetag: 07.11.2008
(51) Int. Cl.: B01D 39/16, B01D 39/20

(54) **Mehrlagiges, insbesondere zweistufiges Filterelement zur Reinigung eines mit Partikeln behafteten Mediums**

(30) Priorität: 08.11.2007 DE 202007015659 U
(71) Anmelder: MANN+HUMMEL GmbH, 71638 Ludwigsburg (DE)
(72) Erfinder: Heikamp, Wolfgang, 67165 Waldsee (DE); Stephan, Andreas, 67346 Speyer (DE)
(74) Vertreter: Voth, Gerhard

(57) **Zusammenfassung**

Die Erfindung betrifft ein mehrlagiges Filterelement zur Reinigung eines mit flüssigen oder festen Partikeln behafteten Mediums mit mindestens einer Glasfaservlieslage und mindestens einer weiteren Faservlieslage. Um insbesondere eine optimale Abscheidung von Öl aus dem Gasstrom zu erreichen ist die mindestens eine weitere Faservlieslage eine Nanofaservlieslage und es können mehrere Nanofaservlieslagen zwischen mehreren Glasfaservlieslagen in einem Verbund oder Schichtaufbau angeordnet werden.

## Beschreibung

### Technisches Gebiet

Die Erfindung betrifft ein mehrlagiges, insbesondere zweistufiges Filterelement zur Reinigung eines mit flüssigen oder festen Partikeln behafteten Mediums, beispielsweise eines mit Öl oder einer sonstigen Flüssigkeit verunreinigten Gasstromes, nach der Gattung des Hauptanspruchs.

### Stand der Technik

Es ist beispielsweise aus der EP 1369160 A1 bekannt, ein Glasfaservlies als Filterelement zu verwenden, um Gase, insbesondere Luft, dadurch zu entölen, dass das Öl aus dem Gasstrom über das Glasfaservlies abgeschieden wird. Solche Systeme werden zum Beispiel bei der Drucklufterzeugung zum Entölen der vom Kompressor bereitgestellten Druckluft eingesetzt.

Beim diesem Stand der Technik wird über im Glasfaservlies enthaltene Kohlenstofffasern der Restölgehalt über eine längere Standzeit optimiert, d.h. es wird die Wirkung der oleophoben Glasfasern unterstützt. Hierbei ist auch vorgesehen, dass ein mehrlagiges Filterelement aufgebaut wird, das die positiven Wirkungen der verschiedenen Materialien im Schichtaufbau eines solchen Filterelements ausnützen kann.

Es ist aus dieser zuvor erwähnten Druckschrift auch bekannt, dass das Fi-Iterelement auf einem Trägerkörper angeordnet wird, der beispielsweise eine Gitterstruktur aufweist und die Form eines Hohlzylinders besitzt, so dass das Filtervlies auf den Außenmantel oder den Innenmantel des Trägerkörpers aufgewickelt ist. Es ist aber auch eine flächige Anordnung der Filtervlieslagen beschrieben.

Weiterhin ist aus der DE 199 19 809 C2 bekannt, dass ein Staubfilterbeutel zusätzlich zu einer Trägermateriallage eine Nanofaservlieslage aufweist, die einen guten Staubabscheidegrad auch für Feinstpartikel aufweist und darüber hinaus eine geringe Verstopfungseigenschaft besitzt.

Aus der DE 100 40 897 B4 ist darüber hinaus bekannt, dass solche nanoskalige poröse Fasern aus polymeren Materialien hergestellt werden können, die dann zur Herstellung von Katalysatoren, Filtern oder Absorbern eingesetzt werden können.

### Darstellung der Erfindung

Die Erfindung betrifft ein mehrlagiges, insbesondere zweistufiges Filterelement zur Reinigung eines mit flüssigen oder festen Partikeln behafteten Mediums mit mindestens einer Glasfaservlieslage und mindestens einer weiteren Faservlieslage. In vorteilhafter Weise ist die mindestens eine weitere Faservlieslage eine Nanofaservlieslage, mit der die Filtereigenschaften der insbesondere zur Entölung eins Gasstroms eingesetzten Glasfaservlieslage auf einfache Weise verbessert werden kann. Die Nanofaservlieslage kann dabei auf einem geeigneten Trägermedium abgelegt sein. Vorteilhaft können hierbei auch mehrere Nanofaservlieslagen auf einfache Weise zwischen mehreren Glasfaserlagen sein.

Mit der Erfindung kann eine deutlich verbesserte Abscheidung von flüssigen oder festen Partikeln, beispielsweise von Öl aus einem Gasstrom, erreicht werden. Eine Entölung der Gasströme kann beispielsweise bei Kompressoren oder Vakuumpumpen durch die vorgeschlagene Kombination von Glasfasermedien in gewickelter oder gefalteter Konfiguration wesentlich verbessert werden, da herkömmliche Glasfasermedien allein hier eine Restölkonzentration von ca. 3 mg Öl pro m3 zu reinigender Luft hinterlassen, die mit der erfindungsgemäßen Kombination mit einer Nanofaservlieslage deutlich und vor allem in einem breiteren Betriebsbereich verbessert werden kann. Vor allem ist auch die Standzeit des erfindungsgemäßen Filterelements trotz höherer Abscheidung mindestens gleich oder besser.

Besonders vorteilhafte Ausführungsformen ergeben sich, wenn die mindestens eine Nanofaservlieslage eine Porengröße von kleiner als 10 µm aufweist. Ferner kann eine optimale Zusammensetzung der Lagen mit mindestens einer Nanofaservlieslage mit Fasern aufgebaut werden, die einen Faserdurchmesser mindestens 200 nm, vorzugsweise im Bereich von ca. 200 bis 1000 nm aufweisen. Die mindestens eine Nanofaservlieslage kann dabei vorzugsweise aus Polyamid, Polyester, Polyvinylidenfluorid oder Polycarbonat, Polyurethan, Polytetrafluorethylen hergestellt werden.

Ein hervorragendes Filterergebnis kann außerdem erreicht werden, wenn die mindestens eine Nanofaservlieslage ein Flächengewicht von ca. 2 bis 50 g/m² aufweist.

Eine optimale Porengröße der mindestens einen Glasfaservlieslage im Lagenaufbau kann erreicht werden, wenn diese mit Fasern aufgebaut ist, die eine Porengröße von mindestens 20 µm, vorzugsweise im Bereich von ca. 20 bis 40 µm, ergeben. Die Glasfaservlieslage kann dabei bevorzugt ein Flächengewicht von ca. 50 bis 100 g/m² aufweisen. Hierbei kann eine spezielle Beschichtung mit zum Beispiel einer Fluorkarbonverbindung, zum Beispiel ein Fluorkarbonpolymer, die oleophoben Eigenschaften der Glasfaservlieslage noch wesentlich verbessern.

Vorzugsweise weist der Verbund aus der mindestens einen Glasfaservlieslage und der mindestens einen Nanofaservlieslage eine Schichtdicke im Bereich von 0,1 bis 13 mm auf.

Ein vorteilhafte Anwendung des erfindungsgemäßen Filterelements kann mit einem Verbund aus der mindestens einen Glasfaservlieslage und der mindestens einen Nanofaservlieslage erfolgen, der um einen zylindrisch Hohlkörper als für das zu filternde Medium durchlässiger Träger für das Filterelement gewickelt ist. Hierbei funktioniert diese Anordnung in gleicher Weise vorteilhaft, wenn die Strömungsrichtung des zu reinigenden Mediums von innen nach außen als auch umgekehrt erfolgt.

Die Erfindung ist aber auch ebenso vorteilhaft anwendbar, wenn der Verbund aus der mindestens einen Glasfaservlieslage und der mindestens einen Nanofaservlieslage als flächiges oder gefaltetes Filterelement ausgeführt ist.

### Kurze Beschreibung der Abbildungen der Zeichnungen

Schematische Ausführungsbeispiele der Erfindung werden in der Zeichnung beschrieben. Hierbei zeigen:

Figur 1 einen Schnitt durch ein hohlzylindrisches Filterelement mit einem innen liegenden Trägerkörper und einem mehrlagigen Verbund aus einer Nanofaservlieslage, die zwischen zwei Glasfaservlieslagen eingeschlossen ist und

Figur 2 eine Ausführung eines gefalteten Verbunds aus einer Nanofaservlieslage, die zwischen zwei Glasfaservlieslagen eingeschlossen ist.

### Weg(e) zur Ausführung der Erfindung

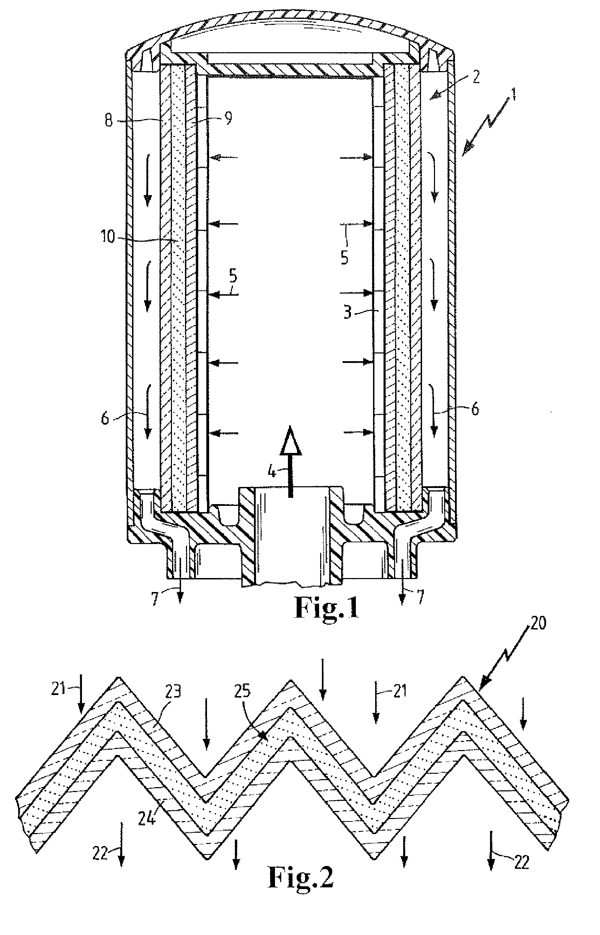

Figur 1 zeigt eine Filteranordnung 1 mit einem hohlzylindrischen Filterelement 2, das auf einem ebenfalls einem hohlzylindrischen Trägerkörper 3 gehalten ist und zur Reinigung eines mit den Pfeilen 4 bis 7 angedeuteten Gasstroms, beispielsweise zum Abscheiden von Öl im Gasstrom, geeignet ist.

Das Filterelement 2 ist hier als Verbund aus Glasfaservlieslagen 8 und 9 und einer dazwischen liegenden Nanofaservlieslage 10, beispielsweise mit einer Schichtdicke im Bereich von 0,1 bis 1 mm, gebildet und wird so von dem Gasstrom durchströmt, dass eine optimale Filterwirkung durch die Kombination der Lagen 8,9 und 10 erfolgt. Eine besonders gute Abscheidung von Öl im Gasstrom ergibt sich hier, wenn beispielsweise die Nanofaservlieslage 10 eine Porengröße von kleiner als 10 µm und einen Faserdurchmesser im Bereich von ca. 200 bis 1000 nm aufweisen. Die Nanofaservlieslage 10 im Filterelement 2 ist zum Beispiel aus Polyamid hergestellt; es können aber auch Polyester, Polyvinylidenfluorid oder Polycarbonat, Polyurethan oder Polytetrafluorethylen verwendet werden. Das Flächengewicht der Nanofaservlieslage 10 kann dabei ca. 2 bis 50 g/m² betragen.

Die Glasfaservlieslagen 8 und 9 im Lagenaufbau des Filterelements 2 sollten zur optimalen Ölabscheidung dagegen eine Porengröße im Bereich von ca. 20 bis 40 µm und ein Flächengewicht von ca. 50 bis 100 g/m² aufweisen. Hierbei kann eine spezielle oleophobe Beschichtung mindestens einer der Glasfaservlieslagen 8 oder 9 mit einer Fluorkarbonverbindung - zum Beispiel einem Fluorkarbonpolymer - die Eigenschaften der Glasfaservlieslage noch wesentlich verbessern.

In Abwandlung zum Ausführungsbeispiel nach der Figur 1 ist in Figur 2 eine Filterelement 20 gezeigt, das zickzackförmig gefaltet ist und hier senkrecht von einem zu reinigenden Gasstrom gemäß der Pfeile 21 und 22 durchströmt wird. Auch hier ist, vergleichbar mit der Anordnung nach der Figur 1, ein Verbund von Glasfaservlieslagen 23 und 24 mit einer dazwischen liegenden Nanofaservlieslage 25 vorhanden. Die Strukturdaten der Glasfaservlieslagen 23, 24 und der Nanofaservlieslage 25 können dabei mit denen anhand des in Figur 1 beschriebenen Filterelements 2 identisch sein.

Die zweite Stufe des Filterelements wird abströmseitig in beiden Anordnungen durch eine weitere Vlieslage gebildet. Das Vliesmaterial besteht aus Polypropylen, Polyester oder Polyamid mit einem Flächengewicht von 140 bis 200 g/m².

## Patentansprüche

1. Mehrlagiges Filterelement zur Reinigung eines mit flüssigen oder festen Partikeln behafteten Mediums mit mindestens einer Glasfaservlieslage und mindestens einer weiteren Faservlieslage, **dadurch gekennzeichnet, dass** die mindestens eine weitere Faservlieslage eine Nanofaservlieslage ist.

2. Mehrlagiges Filterelement nach Anspruch 1, **dadurch gekennzeichnet, dass** mehrere Nanofaservlieslagen zwischen mehreren Glasfaservlieslagen in einem Schichtaufbau angeordnet sind.

3. Mehrlagiges Filterelement nach Anspruch 1 oder 2, **dadurch gekennzeichnet, dass** die mindestens eine Nanofaservlieslage eine Porengröße von kleiner als 10 µm aufweist.

4. Mehrlagiges Filterelement nach einem der vorhergehenden Ansprüche, **dadurch gekennzeichnet, dass** die mindestens eine Nanofaservlieslage mit Fasern aufgebaut ist, die einen Faserdurchmesser von mindestens 200 nm, vorzugsweise im Bereich von ca. 200 bis 1000 nm aufweisen.

5. Mehrlagiges Filterelement nach einem der vorhergehenden Ansprüche, **dadurch gekennzeichnet, dass** die mindestens eine Nanofaservlieslage ein Flächengewicht von mindestens 2g/m², vorzugsweise im Bereich von 2 bis 50 g/m², aufweist.

6. Mehrlagiges Filterelement nach einem der vorhergehenden Ansprüche, **dadurch gekennzeichnet, dass** die mindestens eine Glasfaservlieslage eine Porengröße von 20µm, vorzugsweise im Bereich von 20 bis 40 µm, aufweisen.

7. Mehrlagiges Filterelement nach einem der vorhergehenden Ansprüche, **dadurch gekennzeichnet, dass** die mindestens eine Glasfaservlieslage ein Flächengewicht von 90g/m², vorzugsweise im Bereich von 50 bis 100 g/m², aufweist.

8. Mehrlagiges Filterelement nach einem der vorhergehenden Ansprüche, **dadurch gekennzeichnet, dass** die mindestens eine Glasfaservlieslage mit einer Fluorkarbonverbindung beschichtet ist.

9. Mehrlagiges Filterelement nach einem der vorhergehenden Ansprüche, **dadurch gekennzeichnet, dass** der Verbund aus der mindestens einen Glasfaservlieslage und der mindestens einen Nanofaservlieslage eine Schichtdicke im Bereich von 10 mm, vorzugsweise im Bereich von 5 bis 15 mm aufweist.

10. Mehrlagiges Filterelement nach einem der vorhergehenden Ansprüche, **dadurch gekennzeichnet, dass** die mindestens eine Nanofaservlieslage aus Polyamid, Polyester, Polyvinylidenfluorid oder Polycarbonat, Polyurethan, Polytetrafluorethylen hergestellt ist.

11. Mehrlagiges Filterelement nach einem der vorhergehenden Ansprüche, **dadurch gekennzeichnet, dass** der Verbund aus der mindestens einen Glasfaservlieslage und der mindestens einen Nanofaservlieslage um einen zylindrisch Hohlkörper als für das zu filternde Medium durchlässiger Träger für das Filterelement gewickelt ist.

12. Mehrlagiges Filterelement nach einem der Ansprüche 1 bis 10, **dadurch gekennzeichnet, dass** der Verbund aus der mindestens einen Glasfaservlieslage und der mindestens einen Nanofaservlieslage als flächiges oder gefaltetes Filterelement ausgeführt ist.
